(19) Europäisches Patentamt
European Patent Office
Office européen des brevets

(11) EP 1 840 175 A1

(12) EUROPEAN PATENT APPLICATION
published in accordance with Art. 158(3) EPC

(43) Date of publication:
03.10.2007 Bulletin 2007/40

(21) Application number: 06702123.8

(22) Date of filing: 05.01.2006

(51) Int Cl.:
*C09D 11/00* (2006.01) *B41J 2/01* (2006.01)
*B41M 5/00* (2006.01)

(86) International application number:
PCT/JP2006/300016

(87) International publication number:
WO 2006/073149 (13.07.2006 Gazette 2006/28)

(84) Designated Contracting States:
DE FR GB IT

(30) Priority: 06.01.2005 JP 2005001793

(71) Applicant: JSR Corporation
Tokyo 104-8410 (JP)

(72) Inventors:
- ISHIZUKI, Kenji
u, Tokyo, 1048410 (JP)
- MORI, Takashi
u, Tokyo, 1048410 (JP)
- BESSHO, Keiichi
u, Tokyo, 1048410 (JP)
- KOGANEHIRA, Shuichi
a-shi, Nagano, 3928502 (JP)
- SATO, Hironori
a-shi, Nagano, 3928502 (JP)

(74) Representative: TBK-Patent
Bavariaring 4-6
80336 München (DE)

# (54) EMULSION FOR AQUEOUS INKJET INK

(57) This invention relates to an aqueous ink jet ink emulsion obtained by emulsion polymerization of (b) an ethylenic unsaturated bond-containing monomer under the presence of (a) a hydrophilic group-, hydrophobic group- and radical reactive group-containing reactive emulsifier, and there is provided an additive (polymer emulsion) having an effect of improving print quality (print density, abrasion resistance and glossiness) of printed matter by adding the emulsion to an aqueous ink.



Printed by Jouve, 75001 PARIS (FR)

## Description

[Technical Field]

The present invention relates to a polymer emulsion for addition which is suitable for an aqueous ink excellent in print quality to a medium such as paper or OHP, particularly for an aqueous ink jet ink useful as an ink for ink jet recording.

[Background Art]

A method of performing printing on a base material such as paper by an ink jet system is employed in a printer or the like of a computer or the like, and has recently rapidly come into wide use. A recording system by the ink jet system is a system in which minute liquid droplets of an ink is allowed to fly to be deposited on a recording sheet such as paper or a polymer sheet, thereby performing recording of images, characters and the like, and characterized by high speed, low noise, possibility of multicolorization, extensive flexibility of a recording pattern, no necessity of development-fixing, and the like. Further, with respect to images formed by a multicolor ink jet recording system, records which are by no means inferior to multicolor prints by a platemaking process and prints by a color photographic system have comes to be obtained.
Furthermore, when printing is performed on a medium such as paper or OHP, further improvement of print quality, that is to say, print density, gloss, abrasion resistance, image clarity and the like, has been desired. However, there is no ink at present to satisfy all of them, and an appearance of a more excellent aqueous ink has been desired.
Further, a pigment-based ink composition is excellent in light resistance and gas resistance, compared to a dye-based ink. However, printed matter prepared using an ink composition is sometimes placed not only in a room, but also outside a room, so that it is exposed to sunlight or the outside air (ozone, a nitrogen oxide, a sulfur oxide or the like). Accordingly, an ink composition more excellent in light resistance and gas resistance has been demanded.
To such a demand, JP-A-2004-162043 (patent document 1) discloses that a resin comprising a sulfonic acid groupcontaining polymer is added to a pigment-based ink composition, thereby obtaining an ink composition excellent in fixability of the ink to a recording medium and in glossiness, and also excellent in light resistance and ozone resistance.
However, the above-mentioned ink composition has been inferior to a silver halide photography yet when glossiness is visually evaluated, although satisfactory glossiness is obtained when image evaluation is performed by a known evaluation method as described in JP-A-2003-103898 (patent document 2).
Further, an ink composition more improved in fixability of the ink while maintaining glossiness and gas resistance has been demanded.

[Patent Document 1] JP-A-2004-162043
[Patent Document 2] JP-A-2003-103898

[Disclosure of the Invention]

[Problems That the Invention Is to Solve]

An object of the present invention is to provide an additive (polymer emulsion) having an effect of improving print quality (print density, abrasion resistance, glossiness and the like) of printed matter by adding it to an aqueous ink jet ink.

[Means for Solving the Problems]

The present invention relates to an aqueous ink jet ink emulsion obtained by emulsion polymerization of (b) an ethylenic unsaturated bond-containing monomer under the presence of (a) a hydrophilic group-, hydrophobic group- and radical reactive group-containing reactive emulsifier (hereinafter also referred to as a "reactive emulsifier").
Here, the emulsion of the present invention is preferably an emulsion obtained by further adding (c) a chain transfer agent to use it in combination and conducting emulsion polymerization.
Further, as the hydrophilic group of the reactive emulsifier (a), preferred is one selected from a sulfuric ester group and a polyoxyethylene group.
As the radical reactive group of the reactive emulsifier (a), preferred is an allyloxy group or a propenyl group.
Moreover, the reactive emulsifier (a) is preferably at least one kind selected from the group of the following general formulas (I) to (VI):
[Formula 1]

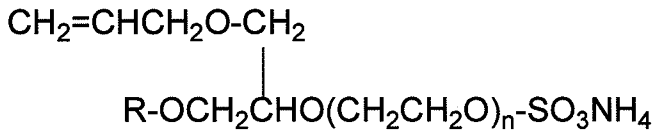

. . . . . (I)

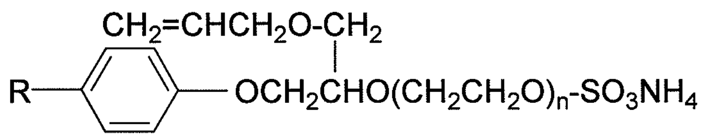

. . . (II)

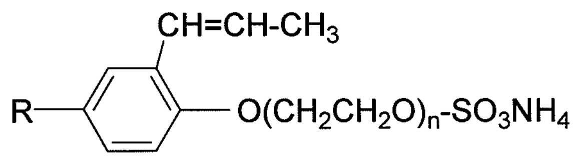

. . . (III)

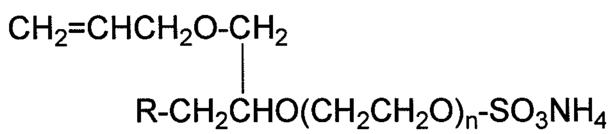

. . . (IV)

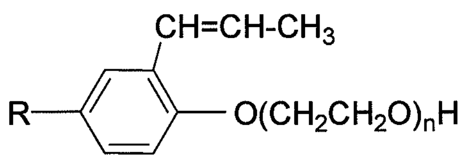

. . . (V)

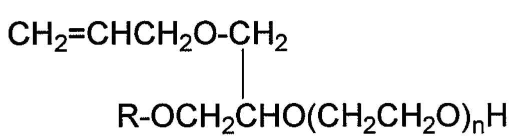

. . . (VI)

(In formulas (I) to (VI), R is a hydrocarbon group (an aliphatic alkyl group or an aromatic group) having 5 to 20 carbon atoms, and n is an integer of 5 to 40.)
Further, the amount of the reactive emulsifier (a) used is preferably from 0.5 to 5 parts by weight based on 100 parts by weight of the ethylenic unsaturated bond-containing monomer (b).
Furthermore, as the above-mentioned ethylenic unsaturated bond-containing monomer (b), preferred is a monomer containing a (meth) acrylic monomer or a (meth) acrylic monomer and an alkoxysilane group-containing monomer.
The amount of the above-mentioned chain transfer agent (c) used is preferably from 0.1 to 10 parts by weight based on 100 parts by weight of the ethylenic unsaturated bond-containing monomer (b).

Moreover, the average particle size of the emulsion is preferably from 10 to 100 nm.
In addition, the weight average molecular weight of the polymer constituting the emulsion is preferably from 10, 000 to 200,000.
The solid concentration of the aqueous ink j et ink emulsion of the present invention is preferably from 5 to 50% by weight.
The aqueous ink jet inks as used herein include a pigment-based ink.

[Advantages of the Invention]

The polymer emulsion for addition to an aqueous ink of the present invention is excellent in print quality to a medium such as paper or OHP, particularly in print density, abrasion resistance and glossiness, when used in an aqueous ink. Accordingly, it is suitable for an ink jet recording aqueous ink.

[Best Mode for Carrying Out the Invention]

The aqueous ink jet ink emulsion of the present invention is obtained by emulsion polymerization of (b) an ethylenic unsaturated bond-containing monomer under the presence of (a) a hydrophilic group-, hydrophobic group- and radical reactive group-containing reactive emulsifier.
The reactive emulsifier as used herein generally means an emulsifier which has emulsifying ability of such a degree that emulsion polymerization is possible and which is radically polymerizable, and the reactive emulsifier (a) of the present invention has a hydrophilic group, a hydrophobic group and radical reactive group in combination.
In the present invention, the amount of an emulsifier used, particularly the amount of a free emulsifier in an aqueous medium, can be decreased by conducting emulsion polymerization using the reactive emulsifier (a). Further, the hydrophilic group contained in the reactive emulsifier improves compatibility of the aqueous ink jet ink emulsion of the present invention with aqueous ink components, so that a polymer emulsion is obtained which provides the aqueous ink excellent in print density, abrasion resistance and glossiness using the same.
The reactive emulsifier (a) used in the present invention is a compound constituted by a hydrophilic group, a hydrophobic group and radical reactive group.
Here, the hydrophilic groups include a sulfuric ester group, a carboxylic acid group, a polyoxyethylene group and the like. Of these hydrophilic groups, a sulfuric ester group and a polyoxyethylene group are particularly preferred. In particular, one having both a sulfuric ester group and a polyoxyethylene group is preferred.
Further, the hydrophobic groups constituting the reactive emulsifier (a) include, for example, an aliphatic alkyl group having 5 to 20 carbon atoms or an aromatic group, preferably an aliphatic alkyl group having 8 to 15 carbon atoms.
Furthermore, the radical reactive groups constituting the reactive emulsifier (a) include, for example, ethylenic unsaturated groups such as an acryl group, a methacryl group, an allyloxy group, a methallyloxy group and a propenyl group. Of these, an allyloxy group and a propenyl group are particularly preferred.
Preferred structural examples of the reactive emulsifiers (a) are as the following general formulas (I) to (VI);
[Formula 2]

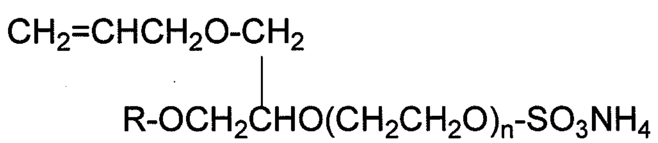

. . . . . (I)

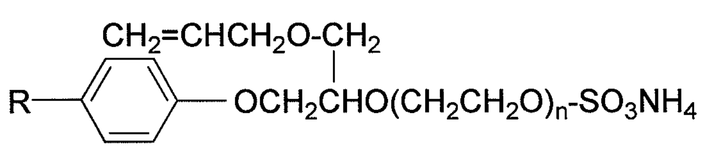

. . . (II)

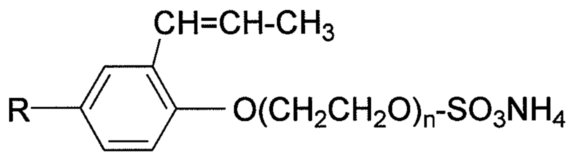

. . . (III)

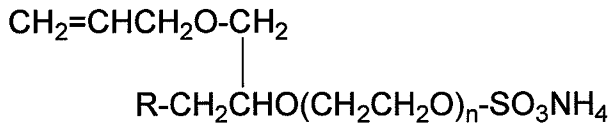

. . . (IV)

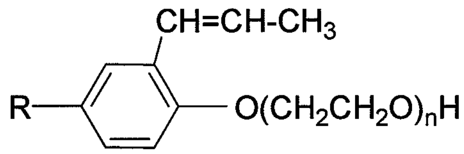

. . . (V)

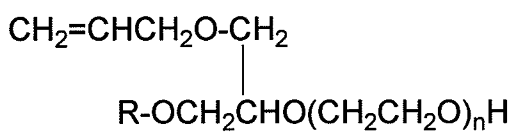

. . . (VI)

In the above-mentioned structural examples, for all structures, R is a hydrocarbon group (an aliphatic alkyl group or an aromatic group) having 5 to 20 carbon atoms, and n is an integer of 5 to 40.

As specific examples of the reactive emulsifiers (a), there can be suitably used Latemul S-180A (manufactured by Kao Corp.), Eleminol JS-2 (manufactured by Sanyo Chemical Industries, Ltd.), Aqualon KH-10, Aqualon HS-10 and Aqualon BC-10 (manufactured by Dai-Ichi Kogyo Seiyaku Co., Ltd.), Adeka Reasoap SE-10 N (manufactured by Asahi Denka Kogyo Ltd.) and the like as reactive emulsifiers in which the hydrophilic group is an anionic functional group.
Further, reactive emulsifiers in which the hydrophilic group is a cationic functional group can also be suitably used.
Furthermore, as reactive emulsifiers in which the hydrophilic group is a nonionic functional group, there can be suitably used Aqualon RS-20 (manufactured by Dai-Ichi Kogyo Seiyaku Co., Ltd.), Adeka Reasoap ER-20 (manufactured by Asahi Denka Kogyo Ltd.) and the like.
The above-mentioned reactive emulsifiers may be used either alone or as a combination of two or more thereof.

The amount of the reactive emulsifier (a) used in the present invention is preferably from 0.5 to 5 parts by weight, and more preferably from 0.5 to 3 parts by weight, based on 100 parts by weight of the whole monomer as the component (b), although it depends upon the particle size of the emulsion described later.
Less than 0. 5 part by weight unfavorably results in insufficient emulsification and deterioration of stability in the polymerization reaction, whereas exceeding 5 parts by weight unfavorably poses a problem of foaming.

In addition to the above-mentioned reactive emulsifier (a), there may be used together a nonreactive emulsifier such as an anionic emulsifier, a nonionic emulsifier, a cationic emulsifier, an amphoteric ion emulsifier or a water-soluble polymer.

The anionic emulsifiers include, for example, an alkali metal salt of a higher alcohol sulfuric ester, an alkali metal salt of an alkylbenzenesulfonic acid, an alkali metal salt of a succinic acid dialkyl ester sulfonic acid, an alkali metal salt of an alkyl diphenyl ether disulfonic acid, a sulfuric ester salt of a polyoxyethylene alkyl ether, a sulfuric ester salt of a polyoxyethylene alkyl phenyl ether, a phosphoric ester salt of a polyoxyethylene alkyl ether, a phosphoric ester salt of a polyoxyethylene alkyl phenyl ether and the like.

The nonionic emulsifiers include, for example, a polyoxyethylene alkyl ether, a polyoxyethylene alkyl phenyl

ether, an alkyl ether having a sugar chain as a hydrophilic group, and the like.

The cationic emulsifiers include an alkyl pyridinyl chloride, an alkylammonium chloride and the like.

The amphoteric ion emulsifiers include lauryl betaine and the like.

The water-soluble polymers include an alkali-neutralized product of a polycarboxylic acid-based polymer obtained by copolymerizing an aromatic monomer with a carboxyl group-containing monomer, polyvinyl alcohol, enzymatically degraded starch and the like.

The amount of these nonreactive emulsifiers used is usually preferably 5 parts by weight or less based on 100 parts by weight of the whole monomer as the component (b), and preferably 50 parts by weight or less, when the water-soluble polymer is used.

These emulsifiers are each preferably added to a polymerization system by at-once addition, divided addition, continuous addition or a combination thereof.

The aqueous ink jet ink emulsion of the present invention can be obtained as an emulsified polymer emulsion by mixing water, a radical polymerization initiator and the ethylenic unsaturated bond-containing monomer (b) (hereinafter also referred to as "monomer (b)", and more preferably the chain transfer agent (c), and further, another emulsifier, an organic solvent and the like in some cases, under the presence of the reactive group-containing reactive emulsifier (a), and conducting emulsion polymerization.

The ethylenic unsaturated bond-containing monomer (b) usable is not particularly limited, and examples thereof include diene monomers such as 1,3-butadiene, 1,2-butadiene, 1,2-pentadiene, 1,3-pentadiene, 2,3-pentadiene, isoprene, 1,2-hexadiene, 1,3-hexadiene, 1,4-hexandiene, 1,5-hexadiene, 2,3-hexadiene, 2,4-hexadiene, 2,3-dimethyl-1,3-butadiene, 2-ethyl-1,3-butadiene, 1,2-heptadiene, 1,3-heptadiene, 1,4-heptadiene, 1,5-heptadiene, 1,6-heptadiene, 2,3-heptadiene, 2,5-heptadiene, 3,4-heptadiene, 3,5-heptadiene, cyclopentadiene, dicyclopentadiene and ethylidene norbornene; aromatic monomers such as styrene, α-methylstyrene, o-methylstyrene, p-methylstyrene, m-methylstyrene, vinylnaphthalene and divinylstyrene; alkyl (meth)acrylates such as methyl (meth) acrylate, ethyl (meth) acrylate, n-propyl (meth) acrylate, i-propyl (meth)acrylate, n-butyl (meth)acrylate, n-amyl (meth) acrylate, i-amyl (meth)acrylate, hexyl (meth) acrylate, 2-ethylhexyl (meth)acrylate, octyl (meth)acrylate, i-nonyl (meth)acrylate, decyl (meth)acrylate, hydroxymethyl (meth)-acrylate and hydroxyethyl (meth)acrylate; unsaturated carboxylic acids such as itaconic acid, fumaric acid, (meth) acrylic acid, maleic acid and crotonic acid; ethylenically unsaturated carboxylic acid alkylamides such as (meth)-acrylamide and N-methylolacrylamide; vinyl carboxylates such as vinyl acetate and vinyl propionate; anhydrides, monoalkyl esters andmonoamides of ethylenically unsaturated dicarboxylic acids; aminoalkyl esters of ethylenically unsaturated carboxylic acids such as aminoethyl acrylate, dimethylaminoethyl acrylate and butylaminoethyl acrylate; ethylenically unsaturated carboxylic acid aminoalkylamides such as aminoethylacrylamide, dimethylaminomethylmethacrylamide and methylaminopropylmethacrylamide; vinyl cyanide-based compounds such as (meth)acrylonitrile and α-chroloacrylonitrile; unsaturated aliphatic glycidyl esters such as glycidyl (meth) acrylate, and the like. These monomers may be used either alone or as a combination of two or more thereof.

Of these monomers (b), preferred are 1,3-butadiene, isoprene, styrene and alkyl(meth)acrylates as (meth)acrylic monomers, such as methyl (meth) acrylate, ethyl (meth) acrylate, n-butyl (meth)acrylate and 2-ethylhexyl (meth)acrylate, and particularly preferred are alkyl (meth)acrylates.

The monomer (b) may contain a functional group-containing monomer containing an alkoxysilane group, an epoxy group, a hydroxyl group or a polyethylene oxide group as a functional group.

In particular, an alkoxysilane group-containing monomer is preferably used.

Here, the alkoxysilane group-containing monomers include, for example, γ-methacryloxypropyltriethoxysilane, γ-acryloxypropyltriethoxysilane, γ-methacryloxypropyltrimethoxysilane, γ-acryloxypropyltrimethoxysilane, vinyltriethoxysilane and vinyltrimethoxysilane.

Further, the epoxy group-containing monomers include, for example, glycidyl (meth)acrylate, and the hydroxyl group-containing monomers include, for example, 2-hydroxyethyl methacrylate. The polyethylene oxide group-containing monomers include, for example, polyethylene glycol monomethacrylate (trade name: Blemmer PE 200, manufactured by Nippon Oils & Fats Co., Ltd.).

The amount of these functional group-containing monomers used is 10% by weight or less, and preferably 5% by weight or less, in the monomer (b).

The combined use of the functional group-containing monomer in the component (b) provides the effect of improving the compatibility of the aqueous ink jet ink emulsion of the present invention with the aqueous ink components.

Further, in synthesizing the aqueous ink jet ink emulsion of the present invention, the combined use of the chain transfer agent (c) more improves the effects of the present invention.

Specifically, the chain transfer agents include, for example, mercaptans such as octyl mercaptan, n-dodecyl mercaptan, t-dodecyl mercaptan, n-hexadecyl mercaptan, n-tetradecyl mercaptan and t-tetradecyl mercaptan; xanthogen disulfides such as dimethylxanthogen disulfide, diethylxanthogen disulfide and diisopropylxanthogen disulfide; thiuram disulfides such as tetramethylthiuram disulfide, tetraethylthiuram disulfide and tetrabutylthiuram disulfide; halogenated hydrocarbons such as carbon tetrachloride and ethylene bromide; hydrocarbons such as pentaphenylethane, 1,1-diphenylethylene and α-methylstyrene dimer; and acrolein, methacrolein, ally alcohol, 2-ethylhexyl thioglycolate, terpinolene, α-terpinene, γ-terpinene and dipentene.

These can be used either alone or as a combination of two or more thereof.

Of these, mercaptans, xanthogen disulfides, thiuram disulfides, carbon tetrachloride, 1,1-diphenylethylene, α-methylstyrene dimer, 2-ethylhexyl thioglycolate and the like are suitably used.

The amount of the chain transfer agent (c) used is from 0.1 to 10 parts by weight, preferably from 0.2 to 7 parts by weight, more preferably from 0.2 to 5 parts by weight, and particularly preferably from 0.3 to 3 parts by weight, based on 100 parts by weight of the monomer (b). When the amount of the chain transfer agent used is less than 0.1 part by weight, an effect of improving the gloss of printed matter in not sufficient in some cases. On the other hand, exceeding 10 parts by weight unfavorably results in poor abrasion resistance in some cases.

Although the function of the combined use of the chain transfer agent (c) is not clear, the reason for this is considered that the chain transfer agent is bonded to an end of the polymer constituting the emulsion of the present invention, thereby improving the compatibility with the aqueous ink compositions.

The radical initiators include redox initiators as a combination of an oxidizing agent comprising an organic hydroperoxide such as cumene hydroperoxide, diisopropylbenzene peroxide or diisopropylbenzene hydroperoxide and a reducing agent of a sugar-containing pyrophosphoric acid/sulfoxylate mixture; persulfates such as potassium persulfate and ammonium persulfate; azo initiators such as azobisisobutyronitrile, dimethyl-2,2'-azobisisobutylate and 2-carbamoylazoisobutyronitrile; and organic peroxides such as benzoyl peroxide and lauroyl peroxide, and preferred are organic peroxides.

These radical polymerization initiators are usually from 0.05 to 20 parts by weight, and preferably from 0.1 to 10 parts by weight, based on 100 parts by weight of the monomer (b).

In the emulsion polymerization, 0.5 to 5 parts by weight of the reactive emulsifier (a) and 100 to 5, 000 parts by weight of water, based on 100 parts b weight of the monomer (b), and the above-mentioned radical polymerization initiator and optionally another emulsifier, an organic solvent and the like are used, and allowed to react at a polymerization temperature of 5 to 100˚C, preferably 30 to 90˚C, for a polymerization time of 0.1 to 10 hours, preferably 2 to 5 hours.

A method for addition of the above-mentioned monomer (b) is not particularly limited, and any method of an at-once addition method, a continuous addition method, a divided addition method and the like is employed.

The average particle size of the aqueous ink jet ink emulsion of the present invention thus obtained is preferably from 10 to 100 nm, and more preferably from 30 to 60 nm.

The average particle size as used herein is a value measured by a dynamic light scattering method. When the average particle size exceeds 100 nm, storage stability becomes insufficient, and it becomes difficult to form a thin and uniform film by electrodeposition. Further, the compatibility with the aqueous ink is deteriorated. On the other hand, less than 10 nm results in a significant decrease in polymerization stability.

In the aqueous ink jet ink emulsion of the present invention, the above-mentioned average particle size can be regulated by the molecular weight or the amount of the emulsifier.

Further, the weight average molecular weight of the polymer constituting the aqueous ink jet ink emulsion of the present invention is usually from 10,000 to 200,000, preferably from 20,000 to 150,000, more preferably from 30, 000 to 100, 000, and particularly preferably from 30,000 to 70,000. Above all, it is preferred that the molecular weight is relatively low.

This provides the advantage that the emulsion added can be easily fused in ink drying. Less than 10,000 results in low fixing force of the fused emulsion to the ink components, whereas exceeding 200, 000 results in a significant decrease in fusibility of the emulsion itself.

The weight average molecular weight of the above-mentioned polymer can be regulated by selection of the amount and kind of polymerization initiator kind or by use of the chain transfer agent.

The solid concentration of the aqueous ink jet ink emulsion of the present invention is preferably from 5 to 50%, and more preferably from 10 to 30% by weight.

The solid concentration can be adjusted by appropriately selecting the amount of water or the solvent used in the emulsion polymerization and the charge amount of the components (a) to (c).

The aqueous ink using the aqueous ink jet ink emulsion of the present invention is obtained by mixing a pigment, water, a solvent and the like with the emulsion of the present invention.

The pigments used in the aqueous ink include, for example, azo pigments such as an insoluble azo pigment, a condensed azo pigment, an azo lake and a chelate azo pigment, polycyclic pigments such as a phthalocyanine pigment, a perylene pigment, a perinone pigment, an anthraquinone pigment, a quinacridone pigment, a dioxazine pigment, a thioindigo pigment, an iso-indolinone pigment and a quinophthalone pigment, organic pigments such as a dye lake, a nitro pigment, a nitroso pigment, aniline black and a fluorescent pigment, titanium oxide, iron oxide series and carbon blacks.

As specific examples of the pigments, the carbon blacks include C. I. Pigment Black 7 (carbon black), No. 2300, No. 900, HCF 88, No. 33, No. 40, No. 45, No. 52, MA7, MA8, MA100, No. 2200B and the like, which are manufactured

by Mitsubishi Chemical Corporation; Raven 5750, Raven 5250, Raven 5000, Raven 3500, Raven 1255, Raven 700 and the like, which are manufactured by Columbian Carbon Co., Ltd.; Regal 400R, Regal 330R, Regal 660R, Mogul L, Mogul 700, Monarch 800, Monarch 880, Monarch 900, Monarch 1000, Monarch 1100, Monarch 1300, Monarch 1400 and the like, which are manufactured by Cabot Corporation; Color Black FW1, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, Special Black 4 and the like, which are manufactured by Degussa. These may be used either alone or as a combination of two or more thereof.

The pigments used in yellow ink compositions include C.I. Pigment Yellow 1, 2, 3, 12, 13, 14, 16, 17, 73, 74, 75, 83, 93, 95, 97, 98, 109, 110, 114, 128, 129, 138, 150, 151, 154, 155, 180 and 185, and the like. Preferred is one kind or a mixture of two or more kinds selected from the group consisting of C.I. Pigment Yellow 74, 109, 110, 128 and 138.

The pigments used in magenta ink compositions and light magenta ink compositions include C. I. Pigment Red 5, 7, 12, 48 (Ca), 48 (Mn), 57 (Ca), 15:1, 112, 122, 123, 168, 184, 202 and 209, C.I. Pigment Violet 19 and the like. Preferred is one kind or a mixture of two or more kinds selected from the group consisting of C.I. Pigment Red 122, 202, 209 and C.I. Pigment Violet 19.

The pigments used in cyan ink compositions and light cyan ink compositions include C.I. Pigment Blue 1, 2, 3, 15:3, 15:4, 15:34, 16, 22 and 60, C.I. Vat Blue 4 and 60, and the like. Preferred is one kind or a mixture of two or more kinds selected from the group consisting of C.I. Pigment Blue 15:3, 15:4 and 60.

Further, a self-dispersion pigment which has a hydrophilic group on the above-mentioned pigment and makes possible self dispersion in water without containing any dispersant can also be used. The hydrophilic groups contained in the pigments include a carboxylic acid group, a sulfonic acid group, a phosphoric acid group, a nonion group and the like. The above-mentioned pigments can be used either alone or as a combination of two or more thereof.

Furthermore, even when a known dye is blended with the above-mentioned pigment to use as needed, there is no problem at all.

The pigment concentration in the aqueous ink is usually from 0.1 to 20% by weight, and preferably from 0.5 to 10% by weight. When the pigment density is less than 0.1% by weight, print density is not sufficient. On the other hand, exceeding 20% by weight results in an increase in the particle size of dispersed matter or the occurrence of coagulation to deteriorate print stability in some cases.

A wetting agent or a penetrating agent can also be used in the aqueous ink. The penetrating agents include, for example, glycols such as ethylene glycol, propylene glycol and diethylene glycol, glycerol, polyhydric alcohol ethers such as diethylene glycol monobutyl ether, triethylene glycol monobutyl ether and Carbitol, alcohols, acetates, nitrogen-containing compounds such as thiodiglycol, N-methyl-2-pyrrolidone and triethanolamine, and the like.

The preferred penetrating agent or wetting agent is an alcohol compound having an alkyl group of 5 to 10 carbon atoms. Specifically, they include 1,2-pentanediol, 1,5-pentanediol, 1,2-hexanediol, 1,6-hexanediol, 1,2,6-hexanetriol, ethylene glycol monohexyl ether, diethylene glycol monohexyl ether, triethylene glycol monohexyl ether, pentanol, hexanol, heptanol, octanol and the like. The alkyl group of these compounds may be either straight-chain or branched. Preferred are 1,2-hexanediol and diethylene glycol monohexyl ether. These alcohol compounds can be used either alone or as a combination of two or more thereof.

In addition to the ink jet ink emulsion of the present invention, the pigment and the solvent, known additives can also be added to the aqueous ink. There can be added, for example, a wetting agent such as a polyhydric alcohol, a dispersant, an antifoaming agent, a surface tension modifier such as various kinds of surfactants, a chelating agent, an oxygen absorber and the like.

Further, the dispersants include anionic surfactants such as a fatty acid salt and an alkylsulfonic acid salt, cationic surfactants such as an aliphatic amine and a quaternary ammonium salt, amphoteric surfactants such as a betaine type compound, nonionic surfactants such as a fatty acid ester type of a polyoxyethylene compound, cellulosic polymers, ligninsulfonic acid salts, polyacrylic acid salts, styrene-acrylic acid copolymer salts, styrene-maleic acid copolymer salts, formalin condensates of naphthalenesulfonic acid, polyvinyl alcohol, polyethylene glycol and the like.

The average particle size of the pigment in the aqueous ink is usually from 30 nm to 300 nm, and preferably from 50 nm to 200 nm.

It is preferred that the above-mentioned aqueous ink has a proper viscosity and surface tension suitable for ink jet recording.

The viscosity of the ink jet recording ink is usually from $0.7\times10^{-3}$ Pa·s to $15\times10^{-3}$ Pa·s, and preferably from $1\times10^{-3}$ Pa·s to $10\times10^{-3}$ Pa·s, at 25°C. Further, the surface tension is usually from 20 dynes/cm to 70 dynes/cm, preferably from 25 dynes/cm to 60 dynes/cm, and more preferably from 30 dynes/cmto 40 dynes/cm, at 25°C.

[Examples]

The present invention will be illustrated in further detail with reference to the following examples, but the invention should not be construed as being limited thereto.

In the examples, parts and percentages are on a weight by weight basis unless otherwise specified.

Example 1

A 2-liter beaker was charged with 450 g of water, and 348 g (58 parts) of methyl methacrylate, 240 g (40 parts) of butyl acrylate and 12 g (2 parts) of acrylic acid as monomers (b) (the total of the monomers is 100 parts) and 30 g of a 15% aqueous solution of Aqualon KH-10 manufactured by Dai-Ichi Kogyo Seiyaku Co., Ltd. (hereinafter referred to as "reactive emulsifier A") as a reactive emulsifier, respectively, as shown in Table 1, followed by stirring at 100 rpm for 10 minutes to obtain monomer emulsion (1) . Then, 520 g of water and 90 g of the 15% aqueous solution of reactive emulsifier (A) were set in a 2-liter separable flask, and stirred at 180 rpm. The temperature thereof was elevated to 60˚C, and 2 g of ammonium persulfate was added, followed by elevation of the temperature to 70˚C. The gradual addition of monomer emulsion (1) thereto was initiated and performed for 3 hours while maintaining the polymerization temperature at 75˚C to perform polymerization. Thereafter, the temperature was elevated to 80˚C, followed by aging for one hour. After cooling, the neutralization with a 10% aqueous ammonia solution was conducted to adjust the pH to 7.3. The results of the polymer emulsion obtained herein are shown together in Table 1.

Examples 2 to 5

According to compounding formulations shown in Table 1, polymer emulsions were obtained in the same manner as in Example 1. The results of the polymer emulsions thus obtained are shown together in Table 1. In Examples 4 and 5, 6 g of a chain transfer agent shown in Table 1 was added to use at the time when the various monomers were stirred.
Reactive emulsifier (A) is the same as in Example 1.

Comparative Example 1

Polymerization was performed in the same manner as in Example 1 with the exception that sodiumdodecylbenzenesulfonate (hereinafter referred to as "nonreactive emulsifier (B)") was used in place of reactive emulsifier (A). The results of the polymer emulsion thus obtained are shown in Table 1.
In Table 1, polymerization stability, average particle size, film-forming temperature and weight average molecular weight were measured as follows:

Polymerization Stability

A hundred grams of the resulting emulsion was filtered through a 200-mesh wire gauze, and solid matter left on the wire gauze was dried. Then, the weight thereof was measured to carry out evaluation. The case where the residual solid amount on the wire gauze was 0.002 g or less was evaluated as ○, and the case where it exceeded 0.002 g was evaluated as ×.

Average Particle Size

It was measured with Photal PAR-III manufactured by Otsuka Denshi K.K.

MFT (Film-Forming Temperature (˚C))

It was measured with a film forming temperature tester manufactured by Rigaku Industrial Corporation.

Weight Average Molecular Weight

The weight average molecular weight was measured with SC8010 (GPC) manufactured by Tosoh Corporation, under the following conditions, using a calibration curve prepared from standard polystyrene.
Eluent: tetrahydrofuran
Column: G4000HXL (manufactured by Tosoh Corporation)
Flow rate: 1,000 μl/min
Column temperature: 40˚C
Test Examples 1 to 20 and Comparative Test Examples 1 to 4

Preparation of Ink Compositions

Respective ink compositions shown in Tables 2 to 8 were prepared according to the following procedure. First, 15 g of a pigment (P.Y. 74 (Pigment Yellow 74), 7.5 g of a dispersing resin (pigment dispersing agent) (styrene-acrylic acid copolymer) and 77.5 g of water were mixed, and dispersed together with glass beads (diameter: 1.7 mm, 1.5-fold excess (by weight) in relation to the mixture) for 2 hours in a sand mill (manufactured by Yasukawa Seisakusho). Thereafter, the glass beads were removed to obtain a slurry containing P.Y. 74 as the pigment.
Similarly, dispersion was also performed for P.V. 19 (Pigment Violet 19), P.B. 15:3 (Pigment Blue 15:3) and C.I. Pigment Black 7 (carbon black) to obtain a slurry containing P.V. 19 as the pigment, a slurry containing P.B. 15:3 as the pigment, and a slurry containing C.I. Pigment Black 7 (carbon black) as the pigment.
Then, the above-mentioned pigment slurries and other additives were added so as to give ratios shown in Tables 2 to 8, followed by stirring at room temperature for 20 minutes. The resulting mixture was filtered through a 10-μm membrane filter to obtain ink compositions of Test Examples 1 to 20 and Comparative Test Examples 1 to 4.

Evaluation

(1) Evaluation of Glossiness

An ink cartridge of an ink jet printer (PX-G900, manufactured by Seiko Epson Corporation) was filled with each ink composition obtained above. A single color of duty 80% was printed on photo paper (L-type, manufactured by Seiko Epson Corporation) at a resolution of 1440x1440 dpi.
For the resulting recorded matter, the reflected light intensity at a reflection angle of 42 to 48 degrees was measured at an incident angle 45 degrees (slit width: 1 mmϕ on the incident side, 1.5 mmϕ on the reflection side), at a sensitivity of 500 and at an elevation angle 0 degree, with an automatic angle changing photometer (Type GP-200, manufactured by Murakami Color Research Laboratory). At this time, a 12V-50 W halogen lamp was used as a light source, and ND-10 was used as a filter. The voltage applied to the light source was regulated so as to give a glossiness of a standard plate of 42.5. The glossiness of the recorded matter means the highest value among the respective values of the reflected light intensity measured under these measuring conditions. The reproduction error was ±2.0 or less.
The glossy texture of the recorded matter was calculated by the following equation:

$$\text{Glossy texture} = (\text{glossiness}) / (\text{sharpness})^2$$

The glossiness as usedhereinmeans the glossiness obtained by the above-mentioned measurement. The sharpness is the degree of sharpness (also referred to as image clarity) of a recorded image, and means the width of reflection angles which give a reflected light intensity of 0.6 or less, among the respective values of the reflected light intensity measured at the time of the above-mentioned measurement of glossiness. The glossy texture calculated by the above-mentioned equation substantially agrees with the evaluation of glossiness by human visual observation.
The evaluation results of the glossy texture obtained are as shown in Table 8 described below.
Evaluation Criteria:

A: The average value of glossy texture of the single color was 4.0 or more.
B: The average value of glossy texture of the single color was from 3.0 to less than 4.0.
C: The average value of glossy texture of the single color was less than 3.0.

(2) Evaluation of Abrasion Resistance

An ink cartridge of an ink jet printer (PX-G900, manufactured by Seiko Epson Corporation) was filled with each ink composition. A single color of duty 80% was printed on 100 sheets of photo paper (L-type, manufactured by Seiko Epson Corporation) at a resolution of 1440×1440 dpi.
This recorded matter was dried for one hour, and then, 100 sheets of the recorded matter were rubbed with one another as if cards were shuffled. As evaluation criteria, one in which substantially no scratch was observed was taken as A, and one in which scratches were remarkably observed was taken as B. The evaluation results of the abrasion resistance are as shown in Table 8 described below.

(3) Evaluation of Fixability

An ink cartridge of an ink jet printer (PX-G900, manufactured by Seiko Epson Corporation) was filled with each ink composition. A single color of duty 80% was printed on photo paper (L-type, manufactured by Seiko Epson Corporation) at a resolution of 1440x1440 dpi. After printing, the recorded matter was allowed to stand for 2 minutes. Thereafter, a mending tape of an acrylic pressure-sensitive adhesive agent (manufactured by Sumitomo 3M Limited, Scotch Tape) was applied to a printed face, and then immediately peeled off. In this case, one in which the coloring material was not separated was taken as A, and one in which the coloring material was separated was taken as B. The evaluation results of the fixability are as shown in Table 8 described below.

[Table 1]

| | Example 1 | Example 2 | Example 3 |
|---|---|---|---|
| <Compounding Formulation (parts)> | | | |
| (a) Emulsifier[*1-2] | | | |
| Reactive Emulsifier (A)[*1] | 3<br>In monomer emulsification: 0.75<br>In polymerization: 2.25 | 3<br>→ | 3<br>→ |
| Nonreactive Emulsifier (B)[*2] | - | - | - |
| (b) Monomer | | | |
| Methyl Methacrylate | 58 | 0 | 56 |
| Styrene | 0 | 60 | 0 |
| Butyl Acrylate | 40 | 38 | 40 |
| Acrylic Acid | 2 | 2 | 2 |
| γ-Methacryloxypropyl-triethoxysilane | 0 | 0 | 2 |
| (c) Chain Transfer Agent[*3] | - | - | - |
| <Evaluation Results> | | | |
| Polymerization Stability | ○ | ○ | ○ |
| Average Particle Size (nm) | 50 | 60 | 50 |
| MFT (°C) | 15 | 35 | 20 |
| Weight Average Molecular Weight | 80,000 | 95,000 | 90,000 |

| | Example 4 | Example 5 | Comparative Example 1 |
|---|---|---|---|
| <Compounding Formulation (parts)> | | | |
| (a) Emulsifier*1-2 | | | |
| Reactive Emulsifier (A)*1 | 3<br>→ | 3<br>→ | - |
| Nonreactive Emulsifier (B)*2 | - | - | 3<br>In monomer emulsification: 0.75<br>In polymerization: 2.25 |
| (b) Monomer | | | |
| Methyl Methacrylate | 58 | 0 | 58 |
| Styrene | 0 | 60 | 0 |
| Butyl Acrylate | 40 | 38 | 40 |
| Acrylic Acid | 2 | 2 | 2 |
| γ-Methacryloxypropyl-triethoxysilane | 0 | 0 | 0 |
| (c) Chain Transfer Agent*3 | Used | Used | - |
| <Evaluation Results> | | | |
| Polymerization Stability | ○ | ○ | ○ |
| Average Particle Size (nm) | 50 | 45 | 70 |
| MFT (°C) | 15 | 33 | 20 |
| Weight Average Molecular Weight | 45,000 | 50,000 | 95,000 |

*1 Reactive Emulsifier (A): Manufactured by Dai-Ichi Kogyo Seiyaku Co., Ltd., Aqualon KH-10

*2 Nonreactive Emulsifier (B): Sodium dodecylbenzenesulfonate

*3 Chain Transfer Agent: 2-Ethylhexyl thioglycolate

[Table 2]

| Added Component (parts) | Test Example 1 | Test Example 2 | Test Example 3 | Test Example 4 |
|---|---|---|---|---|
| Example 1 (Resin Emulsion) | 0.6 | 0.6 | 0.6 | 0.6 |

(continued)

| Added Component (parts) | | Test Example 1 | Test Example 2 | Test Example 3 | Test Example 4 |
|---|---|---|---|---|---|
| Pigment | P.Y. 74 | 3 | - | - | - |
| | P.V. 19 | - | 3 | - | - |
| | P.B. 15:3 | - | - | 3 | - |
| | C.I. Pigment Black 7 | - | - | - | 3 |
| Pigment Dispersing Agent | | 1.5 | 1.5 | 1.5 | 1.5 |
| Glycerol | | 15 | 15 | 15 | 15 |
| Triethylene Glycol Mono-butyl Ether | | 10 | 10 | 10 | 10 |
| | | | | | |
| Surfynol 465*4 | | 0.1 | 0.1 | 0.1 | 0.1 |
| Ultrapure water | | 69.8 | 69.8 | 69.8 | 69.8 |
| *4 Manufactured by Air Products and Chemicals, Inc. (hereinafter the same) | | | | | |

[Table 3]

| Added Component (parts) | | Test Example 5 | Test Example 6 | Test Example 7 | Test Example 8 |
|---|---|---|---|---|---|
| Example 2 (Resin Emulsion) | | 0.6 | 0.6 | 0.6 | 0.6 |
| Pigment | P.Y. 74 | 3 | - | - | - |
| | P.V. 19 | - | 3 | - | - |
| | P.B. 15:3 | - | - | 3 | - |
| | C.I. Pigment Black 7 | - | - | - | 3 |
| Pigment Dispersing Agent | | 1.5 | 1.5 | 1.5 | 1.5 |
| Glycerol | | 15 | 15 | 15 | 15 |
| Triethylene Glycol Mono-butyl Ether | | 10 | 10 | 10 | 10 |
| | | | | | |
| Surfynol 465*4 | | 0.1 | 0.1 | 0.1 | 0.1 |
| Ultrapure water | | 69.8 | 69.8 | 69.8 | 69.8 |

[Table 4]

| Added Component (parts) | | Test Example 9 | Test Example 10 | Test Example 11 | Test Example 12 |
|---|---|---|---|---|---|
| Example 3 (Resin Emulsion) | | 0.6 | 0.6 | 0.6 | 0.6 |
| Pigment | P.Y. 74 | 3 | - | - | - |
| | P.V. 19 | - | 3 | - | - |
| | P.B. 15:3 | - | - | 3 | - |
| | C.I. Pigment Black 7 | | | | 3 |
| Pigment Dispersing Agent | | 1.5 | 1.5 | 1.5 | 1.5 |
| Glycerol | | 15 | 15 | 15 | 15 |

(continued)

| Added Component (parts) | Test Example 9 | Test Example 10 | Test Example 11 | Test Example 12 |
|---|---|---|---|---|
| Triethylene Glycol Mono-butyl Ether | 10 | 10 | 10 | 10 |
| | | | | |
| Surfynol 465*4 | 0.1 | 0.1 | 0.1 | 0.1 |
| Ultrapure water | 69.8 | 69.8 | 69.8 | 69.8 |

[Table 5]

| Added Component (parts) | | Test Example 13 | Test Example 14 | Test Example 15 | Test Example 16 |
|---|---|---|---|---|---|
| Example 4(Resin Emulsion) | | 0. 6 | 0.6 | 0.6 | 0.6 |
| Pigment | P.Y. 74 | 3 | - | - | - |
| | P.V. 19 | - | 3 | - | - |
| | P.B. 15:3 | - | - | 3 | - |
| | C.I. Pigment Black 7 | - | - | - | 3 |
| Pigment Dispersing Agent | | 1.5 | 1.5 | 1.5 | 1.5 |
| Glycerol | | 15 | 15 | 15 | 15 |
| Triethylene Glycol Mono-butyl Ether | | 10 | 10 | 10 | 10 |
| | | | | | |
| Surfynol 465*4 | | 0.1 | 0.1 | 0.1 | 0.1 |
| Ultrapure water | | 69.8 | 69.8 | 69.8 | 69.8 |

[Table 6]

| Added Component (parts) | | Test Example 17 | Test Example 18 | Test Example 19 | Test Example 20 |
|---|---|---|---|---|---|
| Example 5 (Resin Emulsion) | | 0.6 | 0.6 | 0.6 | 0.6 |
| Pigment | P.Y. 74 | 3 | - | - | - |
| | P.V. 19 | - | 3 | - | - |
| | P.B. 15:3 | - | - | 3 | - |
| | C.I. Pigment Black 7 | - | - | - | 3 |
| Pigment Dispersing Agent | | 1.5 | 1.5 | 1.5 | 1.5 |
| Glycerol | | 15 | 15 | 15 | 15 |
| Triethylene Glycol Mono-butyl Ether | | 10 | 10 | 10 | 10 |
| | | | | | |
| Surfynol 465*4 | | 0.1 | 0.1 | 0.1 | 0.1 |
| Ultrapure water | | 69.8 | 69.8 | 69.8 | 69.8 |

[Table 7]

| Added Component (parts) | | Comparative Test Example 1 | Comparative Test Example 2 | Comparative Test Example 3 | Comparative Test Example 4 |
|---|---|---|---|---|---|
| Comparative Example 1 (Resin Emulsion) | | 0.6 | 0.6 | 0.6 | 0.6 |
| Pigment | P.Y. 74 | 3 | - | - | - |
| | P.V. 19 | - | 3 | - | - |
| | P.B. 15:3 | - | - | 3 | - |
| | C.I. Pigment Black 7 | - | - | - | 3 |
| Pigment Dispersing Agent | | 1.5 | 1.5 | 1.5 | 1.5 |
| Glycerol | | 15 | 15 | 15 | 15 |
| Triethylene Glycol Mono-butyl Ether | | 10 | 10 | 10 | 10 |
| | | | | | |
| Surfynol 465*4 | | 0.1 | 0.1 | 0.1 | 0.1 |
| Ultrapure water | | 69.8 | 69.8 | 69.8 | 69.8 |

[Table 8]

| Example·Comparative Example | Test Example | Glossy Texture | Abrasion Resistance | Fixability |
|---|---|---|---|---|
| Example 1 | 1 | B | A | A |
| | 2 | B | A | A |
| | 3 | B | A | A |
| | 4 | B | A | A |
| Example 2 | 5 | B | A | A |
| | 6 | B | A | A |
| | 7 | B | A | A |
| | 8 | B | A | A |
| Example 3 | 9 | B | A | A |
| | 10 | B | A | A |
| | 11 | B | A | A |
| | 12 | B | A | A |
| Example 4 | 13 | A | A | A |
| | 14 | A | A | A |
| | 15 | A | A | A |
| | 16 | A | A | A |

(continued)

| Example·Comparative Example | Test Example | Glossy Texture | Abrasion Resistance | Fixability |
|---|---|---|---|---|
| Example 5 | 17 | A | A | A |
| | 18 | A | A | A |
| | 19 | A | A | A |
| | 20 | A | A | A |
| Comparative Example 1 | Comparative Test Example 1 | C | B | B |
| | Comparative Test Example 2 | C | B | B |
| | Comparative Test Example 3 | C | B | B |
| | Comparative Test Example 4 | C | B | B |

As apparent from Table 8, the ink compositions obtained in Example 4 (Test Examples 13 to 16) and Example 5 (Test Example 17 to 20) in which the chain transfer agent was used at the time of the emulsion polymerization of the emulsions of the present invention were evaluated as A in all of glossy texture, abrasion resistance and fixability. This reveals that they are particularly excellent in the effect of the present invention.

[Industrial Applicability]

The aqueous ink jet ink emulsion of the present invention is an emulsion which is not only excellent in fixability of the coloring material, but also hard to cause scratches, and excellent in glossy texture, when used for aqueous ink jet, and is particularly useful for ink jet recording. However, this is also usable, for example, for inks of writing instruments such as general fountain pens, ballpoint pens and marking pens.

## Claims

1. An aqueous ink jet ink emulsion obtained by emulsion polymerization of (b) an ethylenic unsaturated bond-containing monomer under the presence of (a) a hydrophilic group-, hydrophobic group- and radical reactive group-containing reactive emulsifier.

2. The aqueous ink jet ink emulsion according to claim 1, which is obtained by further adding (c) a chain transfer agent and conducting emulsion polymerization.

3. The aqueous ink jet ink emulsion according to any one of claims 1 and 2, wherein the hydrophilic group of the reactive emulsifier (a) is selected from the group consisting of a sulfuric ester group and a polyoxyethylene group.

4. The aqueous ink jet ink emulsion according to any one of claims 1 to 3, wherein the radical reactive group of the reactive emulsifier (a) is an allyloxy group or a propenyl group.

5. The aqueous ink jet ink emulsion according to any one of claims 1 to 4, wherein the reactive emulsifier (a) is at least one kind selected from the group consisting of the following general formulas (I) to (VI):
[Formula 1]

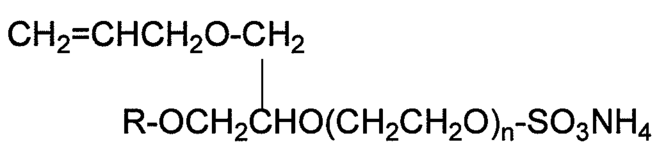

. . . . . (I)

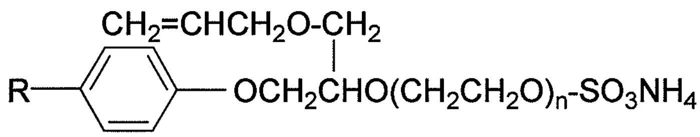

. . . (II)

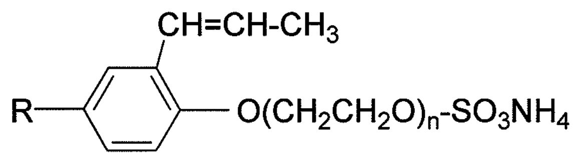

. . . (III)

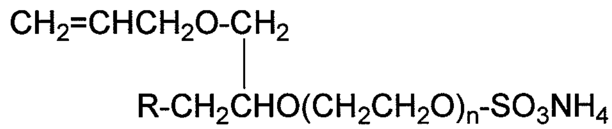

. . . (IV)

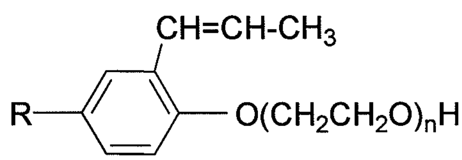

. . . (V)

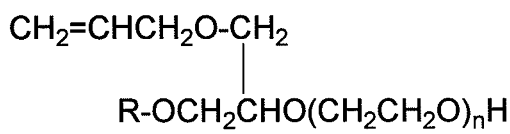

. . . (VI)

(In formulas (I) to (VI), R is a hydrocarbon group (an aliphatic alkyl group or an aromatic group) having 5 to 20 carbon atoms, and n is an integer of 5 to 40.)

**6.** The aqueous ink jet ink emulsion according to any one of claims 1 to 5, wherein the amount of the reactive emulsifier (a) used is from 0.5 to 5 parts by weight based on 100 parts by weight of the ethylenic unsaturated bond-containing monomer (b).

**7.** The aqueous ink jet ink emulsion according to any one of claims 1 to 6, wherein the ethylenic unsaturated bond-containing monomer (b) contains a (meth) acrylic monomer or a (meth) acrylic monomer and an alkoxysilane group-containing monomer.

**8.** The aqueous ink jet ink emulsion according to any one of claims 1 to 7, wherein the amount of the chain transfer agent (c) used is from 0.1 to 10 parts by weight based on 100 parts by weight of the ethylenic unsaturated bond-containing monomer (b).

**9.** The aqueous ink jet ink emulsion according to any one of claims 1 to 8, wherein the average particle size of the emulsion is from 10 to 100 nm.

**10.** The aqueous ink jet ink emulsion according to any one of claims 1 to 9, wherein the weight average molecular weight of the polymer constituting the emulsion is from 10, 000 to 200, 000.

**11.** The aqueous ink jet ink emulsion according to any one of claims 1 to 10, wherein the aqueous ink jet ink is a pigment-based ink.

**INTERNATIONAL SEARCH REPORT**

International application No.
PCT/JP2006/300016

A. CLASSIFICATION OF SUBJECT MATTER
***C09D11/00***(2006.01), ***B41J2/01***(2006.01), ***B41M5/00***(2006.01)

According to International Patent Classification (IPC) or to both national classification and IPC

B. FIELDS SEARCHED

Minimum documentation searched (classification system followed by classification symbols)
B41J2/01-2/21, B41M5/00, C09D11/00-11/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-294105 A (Toyo Ink Manufacturing Co., Ltd.), 09 October, 2002 (09.10.02), Claims; Par. Nos. [0019] to [0027]; examples (Family: none) | 1-11 |
| X | JP 10-316909 A (Mitsubishi Chemical Corp.), 02 December, 1998 (02.12.98), Claims; Par. Nos. [0007] to [0016]; examples (Family: none) | 1-11 |
| X | JP 2001-302708 A (Mitsubishi Chemical Corp.), 31 October, 2001 (31.10.01), Claims; Par. Nos. [0013] to [0021]; examples (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 March, 2006 (24.03.06) | 04 April, 2006 (04.04.06) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/300016

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-247797 A (Konica Corp.), 11 September, 2001 (11.09.01), Claims; Par. Nos. [0031] to [0058]; examples (Family: none) | 1-11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004162043 A
- JP 2003103898 A